# EUROPÄISCHE PATENTANMELDUNG

(11) **EP 1 818 319 A2**
(43) Veröffentlichungstag der Anmeldung: **15.08.2007**
(21) Anmeldenummer: 07101746.1
(22) Anmeldetag: 05.02.2007
(51) Int. Cl.: C04B 35/573, C04B 35/622, B32B 18/00, B44C 1/00, B44C 3/00, B44C 5/00

(54) **Dekorationsstruktur**

(30) Priorität: 09.02.2006 DE 102006007271
(71) Anmelder: DLR Deutsches Zentrum für Luft- und Raumfahrt e.V., 51147 Köln (DE); Dr.Ing. h.c. F. Porsche Aktiengesellschaft, 70435 Stuttgart (DE)
(72) Erfinder: Heidenreich, Bernhard, 71679 Asperg (DE); Gahr, Michaela, 71065 Sindelfingen (DE); Seiz, Susanne, 71384 Weinstadt (DE); Schmidt, Jens, 70736 Fellbach (DE); Renz, Ralph, 71069 Sindelfingen (DE)
(74) Vertreter: Hoeger, Stellrecht & Partner Patentanwälte

(57) **Zusammenfassung**

Es wird eine Dekorationsstruktur vorgeschlagen, umfassend einen Träger (12) und mindestens ein dekoratives Element (14), welches an dem Träger (12) angeordnet ist, wobei das mindestens eine dekorative Element (14) aus einem Keramikmaterial hergestellt ist, welches mindestens teilweise aus einem pyrolysierbaren Grundmaterial auf Holzbasis hergestellt ist.

## Beschreibung

Die Erfindung betrifft eine Dekorationsstruktur.

Eine Dekorationsstruktur lässt sich beispielsweise für Zierleisten, Blenden, Abdeckungen usw. einsetzen. Sie muss ästhetisch ansprechend sein und eine an die Anwendung angepasste mechanische Stabilität aufweisen.

Aus der DE 43 10 674 A1 ist ein plastisches Material bekannt, welches 50 bis 95 Gewichtsteile Siliciumcarbidpulver, 50 bis 5 Gewichtsteile direkt dargestellte Phenylgruppen enthaltende Polycarbosilane, gegebenenfalls 0,1 bis 3 Gewichtsteile Borverbindung, 6 bis 30 Gewichtsteile organisches Lösungsmittel, in dem das Polycarbosilan löslich oder quellbar ist und gegebenenfalls Hilfsstoffe enthält. Keramik-Keramikverbunde werden unter Verwendung des plastischen Materials zusammengefügt. Anschließend erfolgt eine thermische Behandlung zur Herstellung des Verbunds und zur Keramisierung des plastischen Materials.

Aus der DE 199 47 731 A1 ist ein Bauteil aus SiC-Keramik bekannt, das aus einem Ausgangskörper aus zellulosehaltigem Material durch dessen Pyrolyse und nachfolgender Infiltration von Silizium, das wenigstens teilweise mit Kohlenstoff zu SiC reagiert, hergestellt ist. Der Ausgangskörper besteht aus einem technischen Halbzeug, das aus Bestandteilen in Form von Spänen und/oder einer oder mehreren Lagen aus zellulosehaltigem Material, verbunden mit pyrolysierbarem Bindemittel, unter Einstellung des Gefüges des Bauteils durch die Wahl und die Massenanteile des zellulosehaltigen Materials zu dem Bindemittel hergestellt ist.

Aus der DE 103 29 822 A1 ist ein Verfahren zur Herstellung von Strukturkeramiken und/oder Funktionskeramiken aus Siliziumcarbid-Keramik bekannt, bei welchem zur Herstellung eines Vorkörpers als Ausgangsbestandteil mindestens zellulosehaltiges Pulver verwendet wird.

Aus der DE 696 12 059 T2 (EP 0 774 594 B1) ist ein Synchronring mit einer ringartigen Struktur und mit einer konisch zulaufenden inneren Umfangsfläche und einer Lage eines Reibungselements bekannt. Diese Lage ist auf der inneren Umfangsfläche der ringartigen Struktur ausgebildet. Das Reibungselement ist aus Holzkeramik gebildet, welche durch Imprägnierung eines Holzmaterials, das eine poröse Struktur aufweist, mit einem Phenolharz, Aushärten des Phenolharzes und anschließend Carbonisieren des Holzmaterials und des Phenolharzes erhalten wird.

Aus der DE 102 24 243 A1 ist ein Verfahren zur Herstellung eines tribologisch über eine Funktionsoberfläche beanspruchten Bauteils bekannt.

Aus der US 4,806,206 ist ein Verfahren zur Herstellung eines Keramikbauteils bekannt.

Der Erfindung liegt die Aufgabe zugrunde, eine Dekorationsstruktur bereitzustellen, welche eine verschleißfeste Oberfläche aufweist.

Diese Aufgabe wird erfindungsgemäß dadurch gelöst, dass ein Träger vorgesehen ist und mindestens ein dekoratives Element vorgesehen ist, welches an dem Träger angeordnet ist, wobei das mindestens eine dekorative Element aus einem Keramikmaterial hergestellt ist, welches mindestens teilweise aus einem pyrolysierbaren Grundmaterial auf Holzbasis hergestellt ist.

Durch den Träger ist eine Stützstruktur bereitgestellt, durch die sich auch ein relativ dünnes dekoratives Element halten lässt. Insbesondere lassen sich dann auch bruchanfällige dekorative Elemente einsetzen. Dadurch wiederum ist es ermöglicht, keramische dekorative Elemente einzusetzen, die beispielsweise auf Naturholzbasis hergestellt sind. Bei keramischen Elementen auf Naturholzbasis besteht grundsätzlich das Problem, dass aufgrund ungleichmäßigen Wuchses des Naturholzes und einer sonst notwendigen Dicke der Bauteile bei der Pyrolyse Risse entstehen können, die durch ungleichmäßige Volumenschrumpfung verursacht sind. Durch die erfindungsgemäße Lösung lassen sich beispielsweise dünne bruchanfällige Elemente einsetzen, so dass auch keramisierte Naturhölzer verwendbar sind.

Es ist auch möglich, massive Bauteile wie Schalthebel oder Handbremshebel mit der erfindungsgemäßen dekorativen Struktur bereitzustellen.

Erfindungsgemäß ist eine Dekorationsstruktur bereitgestellt, welche eine keramische Oberfläche hat, welche entsprechend verschleißfest und korrosionsbeständig ist. Es lässt sich eine glatte Oberfläche bereitstellen, die dicht ist und kratzfest ist und auch eine gute Haptik aufweist. Sie erfährt durch Sonneneinstrahlung/UV-Strahlung keine Farbänderung. Sie ist chemisch resistent insbesondere bezüglich Lösungsmittel. Das dekorative Element ist temperaturstabil und damit auch bei extrem starker Sonneneinstrahlung einsetzbar. Es wird beispielsweise durch Glut nicht beschädigt.

Die Dekorationsstruktur hat eine Maserung. Diese entsteht durch den Restkohlenstoff des Holzes im keramischen Material.

Die Oberflächeneigenschaften lassen sich durch mechanische Bearbeitung und entsprechende Anpassung der Rauhigkeit anpassen. Dadurch wiederum lassen sich die optischen Eigenschaften, die die Ästhetik bestimmen, einstellen; je nach Rauhigkeit erhält man andere Lichtreflexionseigenschaften. Durch Verwendung unterschiedlicher Holzmaterialien lassen sich unterschiedliche optische Effekte erzielen. Es ist beispielsweise auch möglich, dass eine Infiltration mit Metallmaterialien wie Kupfer oder Kupferlegierungen oder Nickel durchgeführt wird, um ein "Farbenspiel" zu erzeugen. Ein dekoratives Element lässt sich an seiner Oberfläche auch temperaturbehandeln, um Anlassfarben zu erzeugen und damit einen entsprechenden optischen Eindruck zu erzeugen.

Beispielsweise umfasst das pyrolysierbare Grundmaterial für das mindestens eine dekorative Element mindestens eine Furnierlage aus Naturholz. Die Maserung des Naturholzes resultiert in einer Maserung des dekorativen Elements und bestimmt den ästhetischen Eindruck des dekorativen Elements. Durch die erfindungsgemäße Lösung lassen sich auch dünne Furnierlagen an Naturholz keramisieren. Eine Furnierlage kann beispielsweise eine Größe unterhalb eines Millimeters aufweisen; mehrere Furnierlagen können miteinander verbunden sein.

Es ist beispielsweise auch möglich, dass das pyrolysierbare Grundmaterial für das mindestens eine dekorative Element technisches Holz umfasst. Es ist dabei grundsätzlich möglich, dass eine Kombination aus technischem Holz und Naturholz eingesetzt wird.

Beispielsweise ist es auch möglich, dass das mindestens eine dekorative Element eine oder mehrere Intarsien umfasst. Durch entsprechende Einlegearbeiten wird der ästhetische Eindruck des dekorativen Elements eingestellt.

Ganz besonders vorteilhaft ist es, wenn das mindestens eine dekorative Element aus einem Carbidkeramikmaterial hergestellt ist. Dadurch erhält man eine hohe Verschleißfestigkeit und hohe Korrosionsbeständigkeit.

Beispielsweise ist das mindestens eine dekorative Element durch Carbidbildnerinfiltration nach einer Pyrolyse des pyrolyisierbaren Grundmaterials hergestellt. Entsprechende Verfahren sind in der DE 101 43 015 A1 beschrieben, auf die ausführlich Bezug genommen wird. Entsprechende Verfahren sind auch in den Artikeln "Biomorphous ceramics from lignocellulosics" von P. Greil, Journal of the European Ceramic Society 21 (2001) 105-118, "Low cost SiC ceramics from wooden products" von J. Schmidt et al., Proceedings of Materials Week 2000, Munich, Germany, Sept. 25-28 oder , "Dense Reaction Infiltrated Silicon/Silicon Carbid Ceramics Derived from Wood based Composites" von A. Hofenauer et al., Advanced Engineering Materials 2003, 5 No. 11 Seiten 794 - 799 beschrieben. Auf diese Druckschriften wird ausdrücklich Bezug genommen.

Günstig ist es, wenn das mindestens eine dekorative Element plattenförmig ausgebildet ist. Es kann dabei eben plattenförmig oder gekrümmt plattenförmig ausgebildet sein, wobei das plattenförmige Element vorzugsweise eine einheitliche Dicke aufweist. Es lässt sich entsprechend dünn herstellen, so dass eine Rissbildung bei der Pyrolyse weitgehend vermeidbar ist.

Beispielsweise weist das mindestens eine dekorative Element eine Dicke kleiner 1 cm und vorzugsweise kleiner 0,5 cm auf, um die Rissbildung während der Pyrolyse weitgehend zu vermeiden. Die erfindungsgemäße Lösung ist auch für dickere dekorative Elemente anwendbar.

Es kann vorgesehen sein, dass eine Oberfläche des mindestens einen dekorativen Elements mechanisch bearbeitet ist. Durch mechanische Bearbeitung lässt sich die Oberflächenrauhigkeit einstellen. Dadurch wiederum lassen sich Lichtreflexionseigenschaften und damit der optische Eindruck einstellen. Bei der mechanischen Bearbeitung handelt es sich beispielsweise um Polieren, Schleifen, Sandstrahlen, Kugelstrahlen, Trowalieren.

Es kann auch vorgesehen sein, dass das mindestens eine dekorative Element mit einem oder mehreren farbbeeinflussenden Materialien wie Metallmaterialien (beispielsweise Kupfer) infiltriert ist. Durch eine solche Infiltration lässt sich ein "Farbenspiel" erzeugen, um so den optischen Eindruck zu beeinflussen.

Ganz besonders vorteilhaft ist es, wenn der Träger als Befestigungsstruktur für die Dekorationsstruktur an einer Anwendung ausgebildet ist. Dadurch lassen sich das oder die dekorativen Elemente über den Träger an einer Anwendung fixieren.

Ferner ist es vorteilhaft, wenn der Träger als Tragestruktur bei der Herstellung der Dekorationsstruktur ausgebildet ist. Dadurch lässt sich ein Ausgangskörper für ein dekoratives Element positionieren, um diesen während der Herstellung bearbeiten zu können.

Ferner ist es günstig, wenn der Träger als Splitterschutzeinrichtung ausgearbeitet ist und insbesondere mindestens eine Splitterschutzlage aufweist. Dadurch lässt sich eine Splitterstreuung weitgehend vermeiden. Die Splitterschutzeinrichtung kann beispielsweise eine elastische Zwischenschicht entsprechender Dicke zwischen dem Träger und dem mindestens einen dekorativen Element umfassen. Insbesondere erfolgt die Verbindung zwischen dem mindestens einen dekorativen Element und dem Träger über diese elastische Zwischenschicht. Dadurch kann ein dekoratives Element beim Aufprall durch ein Körperteil einer Person nachgeben und entstehende Splitter können festgehalten werden bzw. auf dem Träger gebunden werden. Die Splitterschutzeinrichtung kann beispielsweise auch eine Strukturierung des Trägers und/oder des dekorativen Elements an einander zugewandten Seiten umfassen. Beispielsweise sind Kerben oder Schlitze oder dergleichen vorgesehen, um das Bruchverhalten einzustellen. Die Einstellung erfolgt insbesondere derart, dass das Entstehen von kleinformatigen Bruchteilen gefördert wird und das Entstehen von langen, spitzen Splittern verhindert wird.

Es kann vorgesehen sein, dass der Träger mindestens teilweise aus einem pyrolysierbaren Grundmaterial hergestellt ist. Es lässt sich dann beispielsweise eine stoffschlüssige Verbindung zwischen dem mindestens einen dekorativen Element und dem Träger erreichen.

Das pyrolysierbare Grundmaterial kann dabei cellulosehaltiges Material und insbesondere technische Holzwerkstoffe umfassen.

Es kann auch vorgesehen sein, dass der Träger mindestens teilweise aus einem faserverstärkten Material hergestellt ist. Dadurch lässt sich eine Stützstruktur mit einer entsprechenden mechanischen Stabilität bereitstellen.

Beispielsweise ist es auch möglich, dass der Träger mindestens teilweise aus einem Kunststoffmaterial hergestellt ist. Ein solcher Träger lässt sich auf einfache Weise mit großer Formenvielfalt herstellen. Beispielsweise lassen sich dann auch dekorative Element durch Umspritzung an dem Träger positionieren.

Es ist auch möglich, dass der Träger mindestens teilweise aus einem Keramikmaterial hergestellt ist. Es kann sich dabei um ein monolithisches Keramikmaterial und/oder um ein faserverstärktes Keramikmaterial handeln.

Der Träger ist beispielsweise mindestens teilweise aus einem biomorphen XC-Material hergestellt, wobei X ein Carbidbildner ist wie Si und/oder Ti und/oder W und/oder B und/oder TiCu ist, oder aus einem SiSiC-Material hergestellt ist. Durch Cu beispielsweise lässt sich eine hohe Zähigkeit des Werkstoffs erreichen.

Es kann auch vorgesehen sein, dass der Träger mindestens teilweise aus einem metallischen Material hergestellt ist.

Ferner ist es möglich, dass der Träger mindestens teilweise aus Holz hergestellt ist. Beispielsweise ist das Holz umspritzt.

Vorteilhaft ist es, wenn der Träger einen mehrlagigen Aufbau aufweist. Unterschiedliche Lagen können dabei aus unterschiedlichen Materialien hergestellt sein, wobei unterschiedliche Lagen unterschiedliche Funktionen erfüllen. Beispielsweise können eine oder mehrere Lagen als Splitterschutzlagen vorgesehen sein und eine oder mehrere Lagen können zur Befestigung des Trägers an einer Anwendung dienen.

Günstig ist es, wenn in den Träger eine Befestigungseinrichtung für das mindestens eine dekorative Element und/oder für eine Anwendung integriert ist. Dadurch lässt sich das dekorative Element auf einfache Weise an dem Träger fixieren bzw. der Träger lässt sich auf einfache Weise an einer Anwendung fixieren.

Die Befestigungseinrichtung umfasst beispielsweise mindestens eine Aufnahme und/oder mindestens eine Nut und/oder mindestens eine Bohrung und/oder mindestens einen Flansch und/oder mindestens eine Lasche. Beispielsweise lassen sich durch Flansche oder Laschen dekorative Elemente formschlüssig an dem Träger fixieren.

Es kann vorgesehen sein, dass das mindestens eine dekorative Element formschlüssig mit dem Träger verbunden ist. Dadurch lässt sich eine sichere Fixierung des mindestens einen dekorativen Elements an dem Träger erreichen.

Es kann vorgesehen sein, dass das mindestens eine dekorative Element adhäsiv und/oder durch Lötung und/oder stoffschlüssig mit dem Träger verbunden ist. Eine adhäsive Verbindung wird insbesondere nach der Pyrolyse und Carbidbildnerinfiltration durchgeführt. Eine stoffschlüssige Verbindung lässt sich insbesondere während der Pyrolyse und/oder während der Carbidbildnerinfiltration bzw. Keramisierung erreichen. Beispielsweise sind das mindestens eine dekorative Element und der Träger über eine elastische Zwischenschicht einer entsprechenden Dicke adhäsiv miteinander verbunden. Die Zwischenschicht ist beispielsweise aus Silikon oder vulkanisiertem Gummi oder Kunststoffschaum hergestellt. Damit kann dann das mindestens eine dekorative Element beim Aufprall (insbesondere einer Person) nachgeben und die Splitter werden festgehalten bzw. können auf dem Träger gebunden werden.

Beispielsweise sind das mindestens eine dekorative Element und der Träger über ein pyrolysierbares Bindemittel verbunden, wobei das Bindemittel zwischen einem Ausgangskörper des mindestens einen dekorativen Elements und dem Träger bzw. einem Ausgangskörpers des Trägers angewandt wird und mit dem Ausgangskörper für das dekorative Element pyrolysiert wird.

Es ist auch möglich, dass das mindestens eine dekorative Element und der Träger über ein infiltrierbares und/oder keramisierbares Bindemittel verbunden sind. Die insbesondere stoffschlüssige Verbindung zwischen dem dekorativen Element und dem Träger wird dann nach der Pyrolyse über die Infiltrierung bzw. Keramisierung durchgeführt. Insbesondere haben dabei das mindestens eine dekorative Element und der Träger nach der Keramisierung im Wesentlichen den gleichen thermischen Ausdehnungskoeffizienten; dadurch entstehen bei der Abkühlung (nach der Aufheizung zur Keramisierung) keine Risse in dem mindestens einen dekorativen Element.

Es ist grundsätzlich auch möglich, dass das mindestens eine dekorative Element und der Träger integral verbunden sind. Beispielsweise werden dazu entsprechende Ausgangsmaterialien vor der Pyrolysierung miteinander verpresst, um das dekorative Element integral an dem Träger herzustellen.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels einer erfindungsgemäßen Dekorationsstruktur in einer Schnitt-Explosionsdarstellung; und
- Figur 2: eine Schnittansicht eines zweiten Ausführungsbeispiels einer erfindungsgemäßen Dekorationsstruktur.

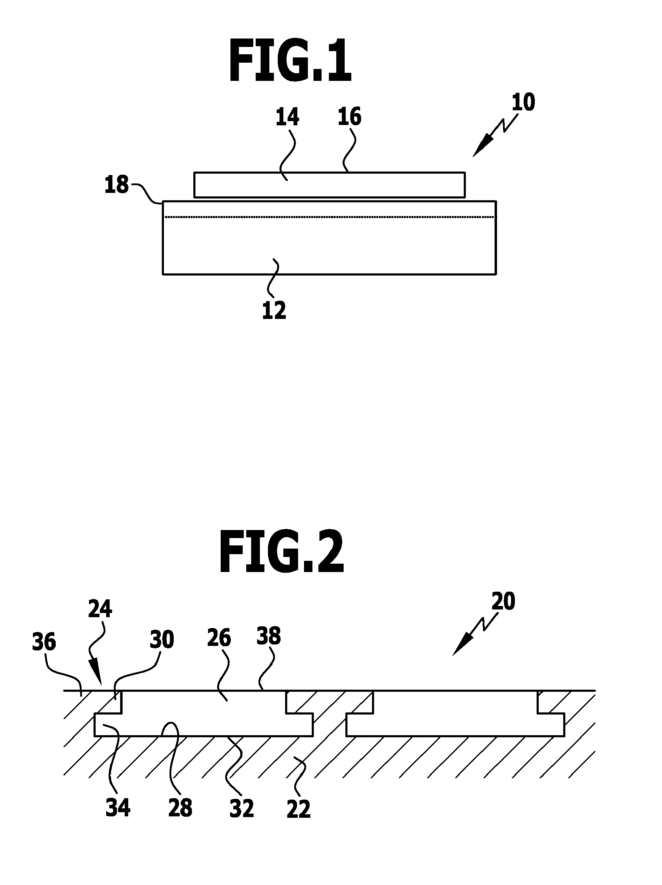

Ein erstes Ausführungsbeispiel einer erfindungsgemäßen Dekorationsstruktur, welches in Figur 1 gezeigt und dort mit 10 bezeichnet ist, umfasst einen Träger 12 und mindestens ein dekoratives Element 14, welches an dem Träger 12 angeordnet ist und insbesondere mit diesem verbunden ist. Eine äußere Oberfläche wird mindestens zum größten Teil durch eine äußere Oberfläche 16 des dekorativen Elements 14 bestimmt. Die ästhetische Wirkung und die Oberflächeneigenschaften der Dekorationsstruktur 10 sind somit durch das (mindestens eine) dekorative Element 14 bestimmt.

Das dekorative Element 14 ist aus einem pyrolysierbaren Grundwerkstoff auf Holzbasis hergestellt. Insbesondere umfasst das pyrolysierbare Grundmaterial des dekorativen Elements 14 Naturholz.

Das pyrolysierbare Grundmaterial wird zur Herstellung des dekorativen Elements 14 pyrolysiert (insbesondere bei einer Temperatur oberhalb von 800°C). Es erfolgt dann nach bekannten Verfahren, wie sie beispielsweise in der DE 101 43 015 A1 beschrieben sind, eine Carbidbildnerinfiltration. Beispielsweise erfolgt eine Siliciuminfiltration nach dem bekannten LSI-Verfahren. Das entsprechend hergestellte dekorative Element 14 ist aus einem carbidkeramischen Material. Es weist entsprechend verschleißfeste und korrosionsbeständige Oberflächen auf. Die äußere Oberfläche 16 ist glatt bzw. lässt sich glatt polieren, dicht, kratzfest und weist gute haptische Eigenschaften auf.

Durch die Verwendung von Holz weist das dekorative Element 14 eine Maserung auf.

Durch die mechanische Bearbeitung wie Polierung der äußeren Oberfläche 16 des dekorativen Elements 14 und entsprechende Einstellung der Rauhigkeit und von Oberflächenstrukturrichtungen lässt sich auch der optische Eindruck des dekorativen Elements 14 anpassen; je nach Rauhigkeit und Oberflächenstrukturrichtungen wird Licht unterschiedlich reflektiert.

Es ist beispielsweise auch möglich, dass während der Herstellung des dekorativen Elements 14 eine Infiltrierung mit Metallmaterialien wie Kupfer erfolgt, um ein "Farbenspiel" an dem hergestellten dekorativen Element 14 zu erzeugen. Das in das Keramikmaterial des dekorativen Elements 14 eingeschlossene Material verändert den optischen Eindruck des dekorativen Elements 14.

Es ist grundsätzlich auch möglich, dass das dekorative Element 14 aus einem pyrolysierbaren Grundmaterial hergestellt ist, welches technisches Holz enthält. Thermisches Holz ist aus Spänen und/oder Furnierlagen verpresstes Holz. Dadurch lässt sich ein anderer optischer Eindruck erzielen.

Es ist beispielsweise auch möglich, dass das dekorative Element 14 eine oder mehrere Intarsien enthält. Solche Intarsien können beispielsweise Gräser sein oder Schnitzereien oder verschiedene Holzarten. Beispielsweise können auch verschiedene Maserungen an Naturholz vorgesehen sein. Es lassen sich beispielsweise auch andere Materialien wie Metalle, Keramiken, Steinmaterialien usw. einlagern. Beispielsweise kann auch Naturholz (nicht pyrolysiert) eingelagert werden. Entsprechend müssen bei der Herstellung des dekorativen Keramikelements 14 Freibereiche ausgelassen werden oder die Intarsien werden bereits vor der Pyrolyse eingearbeitet.

Das dekorative Element 14 ist vorzugsweise plattenförmig ausgestaltet mit einer im Wesentlichen konstanten Dicke. Vorzugsweise ist das dekorative Element 14 dünn und weist eine Dicke auf, welche kleiner ist als 1 cm und insbesondere kleiner als 0,5 cm. Das plattenförmige dekorative Element 14 muss dabei nicht unbedingt eben ausgebildet sein, sondern kann auch gekrümmt ausgebildet sein.

Das dekorative Element 14 umfasst beispielsweise eine einzige Naturholz-Furnierlage. Es kann auch mehrere Lagen wie beispielsweise mehrere Naturholz-Furnierlagen umfassen oder eine Naturholz-Furnierlage und eine oder mehrere Lagen aus anderen Materialien umfassen.

Der Träger 12 dient als Stützstruktur für das mindestens eine dekorative Element 14. Der Träger 12 kann auch als Befestigungsstruktur ausgebildet sein, über die die Dekorationsstruktur 10 an einer Anwendung fixierbar ist.

Ganz besonders vorteilhaft ist es, wenn der Träger 12 als Splitterschutzeinrichtung ausgebildet ist, um bei Bruch eines dekorativen Elements 14 eine Splitterstreuung zu verhindern. Dazu umfasst der Träger 12 beispielsweise eine entsprechende Lage 18 (oder mehrere solche Lagen). Die Lage 18 ist beispielsweise aus einem flexiblen Material wie Silikon, Gummi oder Schaum hergestellt. Sie kann ein Gewebe wie beispielsweise eine Aramidfasergewebe, ein Polyethylenfasergewebe oder Spektragewebe umfassen. Beispielsweise kann auch eine flexible Außenschicht beispielsweise aus einer hoch dehnfähigen Kunststofffolie an dem Träger 12 vorgesehen sein.

Es ist auch möglich, dass der Träger 12 als Tragestruktur bei der Herstellung der Dekorationsstruktur 10 ausgebildet ist, um insbesondere einen Ausgangskörper, aus dem dann das dekorative Element 14 hergestellt wird, in Position zu halten.

Der Träger 12 kann aus verschiedenen Materialien hergestellt sein, wobei er auch mehrlagig aufgebaut sein kann mit Lagen, die unterschiedliche Funktionen erfüllen.

Insbesondere ist der Träger 12 so ausgestaltet, dass er in seinem Schrumpfverhalten an das dekorative Element 14 (und auch an Ausgangskörper für das dekorative Element 14) angepasst ist, um mechanische Spannungen gering zu halten.

Beispielsweise ist der Träger 12 aus einem pyrolysierbaren Grundmaterial hergestellt. Das pyrolysierbare Grundmaterial umfasst beispielsweise cellulosehaltiges Material und insbesondere technische Holzwerkstoffe bzw. technische Holzmischungen. Es kann dabei eine oder mehrere Furnierlagen enthalten und/oder Holzspäne enthalten und/oder Holzfasern enthalten.

Das pyrolysierbare Grundmaterial kann faserverstärkt sein.

Es kann eine Keramisierung insbesondere über Infiltration eines Carbidbildners beispielsweise nach dem bekannten LSI-Verfahren erfolgen.

Vorzugsweise wird dabei der Träger 12 vor der Keramisierung endkonturnah bearbeitet.

Es ist beispielsweise möglich, dass der Träger 12 aus einem faserverstärkten Material hergestellt ist. Es kann sich dabei um ein faserverstärktes Keramikmaterial oder um ein faserverstärktes Kunststoffmaterial wie beispielsweise um ein faserverstärktes Polymermaterial handeln.

Es ist auch möglich, dass der Träger 14 eine Lage aus einem biomorphen SiC-Material umfasst bzw. ganz aus diesem Material hergestellt ist, oder aus SiSiC hergestellt ist. Prinzipiell ist es möglich, dass ein carbidkeramisches Material auch Ti, W, B oder TiCu als Carbidbildner enthält.

Es ist beispielsweise auch möglich, dass der Träger 14 mindestens teilweise aus einem metallischen Material hergestellt ist oder aus Holz hergestellt ist. Das Holz kann beispielsweise auch hinterspritzt sein.

Wie oben erwähnt, ist auch eine Mischung aus verschiedenen Materialien möglich.

Der Träger 12 und das mindestens eine dekorative Element 14 sind miteinander verbunden. Dies kann beispielsweise adhäsiv durch nachträgliche Verklebung erfolgen oder über Befestigungselemente.

Bei einem zweiten Ausführungsbeispiel einer Dekorationsstruktur, welche in Figur 2 gezeigt und dort mit 20 bezeichnet ist, weist ein Träger 22 eine integrierte Befestigungseinrichtung 24 auf, über welche dekorative Elemente 26 formschlüssig mit dem Träger 22 verbindbar sind. Die Befestigungseinrichtung 24 umfasst Aufnahmen 28 für die dekorativen Elemente 26. Leisten 30 überlappen diese Aufnahmen 28 teilweise, wobei die Leisten 30 beabstandet zu einem Aufnahmegrund 32 sind. Dadurch ist ein Zwischenraum 34 zwischen einer Unterseite der Leisten 30 und dem Aufnahmegrund 32 gebildet, in den sich dekorative Elemente 26 einschieben lassen bzw. in dem sich diese herstellen lassen. Durch die Leisten 30 ist die Beweglichkeit der dekorativen Elemente 26 nach oben von dem Aufnahmegrund 32 weg gesperrt.

Der Träger 22 ist dabei vorzugsweise so ausgebildet, dass seine äußere Oberfläche 36 fluchtend zu der äußeren Oberfläche 38 der dekorativen Elemente 26 ist.

Eine Befestigungseinrichtung 24 kann weitere Elemente wie beispielsweise Bohrungen oder Nuten umfassen, über die dekorative Elemente 26 an dem Träger 22 fixierbar sind und/oder der Träger 22 an einer Anwendung fixierbar ist.

Es ist grundsätzlich auch möglich, dass eine stoffschlüssige Verbindung zwischen dem Träger 12 und einem dekorativen Element 14 vorliegt. Eine solche stoffschlüssige Verbindung wird während der Herstellung des Trägers 12 und/oder während der Herstellung des dekorativen Elements 14 hergestellt.

Es ist beispielsweise möglich, dass das dekorative Element 14 und der Träger 12 integral hergestellt werden, indem ein gemeinsamer Grundkörper beispielsweise durch Verpressung hergestellt wird.

Beispielsweise ist es auch möglich, dass ein Ausgangskörper des Trägers 12 und ein Ausgangskörper des dekorativen Elements 14 mit einem pyrolysierbaren Bindemittel vor der Pyrolyse aneinander angeordnet werden und durch die Pyrolyse dann eine stoffschlüssige Verbindung hergestellt wird.

Bei einer alternativen Ausführungsform werden ein Ausgangskörper des dekorativen Elements 14 und des Trägers 12 nach einer Zwischenbearbeitung und nach der Pyrolyse mit einem infiltrierbaren bzw. keramisierbaren Bindemittel verbunden. Nach der Carbidbildnerinfiltration bzw. der Keramisierung liegt dann eine stoffschlüssige Verbindung zwischen dem hergestellten dekorativen Element 14 und dem Träger 12 vor.

Erfindungsgemäß wird eine Dekorationsstruktur bereitgestellt, mittels der sich beispielsweise Zierleisten, Blenden, Abdeckungen usw. herstellen lassen. Die Dekorationsstruktur weist eine optisch hochwertige Oberfläche über das oder die dekorativen Elemente 14 auf. Das oder die entsprechenden dekorativen Elemente 14 sind dabei verschleißfest. Gehalten wird ein dekoratives Element 14 durch den Träger 12, welcher eine ausreichende Festigkeit aufweist und welcher eine Stützstruktur für ein dekoratives Element 14 bildet.

Für ein dekoratives Element 14 lässt sich Naturholz mit seiner entsprechenden Maserung als pyrolysierbares Grundmaterial einsetzen. Es lassen sich relativ dünne dekorative Elemente 14 herstellen; grundsätzlich besteht bei Naturhölzern das Problem, dass sie einen ungleichmäßigen Wuchs aufweisen und bei zunehmender Dicke das Problem besteht, dass bei der Pyrolyse (Makro-)Risse aufgrund ungleichmäßiger Volumenschrumpfung entstehen. Bei der erfindungsgemäßen Lösung lässt sich das dekorative Element 14 mit geringer Dicke herstellen, so dass diese Probleme weitgehend vermieden sind. Der Träger 12 bildet die Stützstruktur für ein grundsätzlich bruchanfälliges keramisches dekoratives Element 14.

Es kann dabei vorgesehen sein, dass der Träger 12 selber aus einem pyrolysierbaren Grundmaterial hergestellt ist, wobei eine Verbindung zu einem Ausgangskörper für ein dekoratives Element 14 vor oder nach der Pyrolyse erfolgen kann. Beispielsweise ist es vorgesehen, dass der Träger 12 mindestens teilweise aus einem carbidkeramischen Material hergestellt ist.

## Patentansprüche

1. Dekorationsstruktur, umfassend einen Träger (12) und mindestens ein dekoratives Element (14), welches an dem Träger (12) angeordnet ist, wobei das mindestens eine dekorative Element (14) aus einem Keramikmaterial hergestellt ist, welches mindestens teilweise aus einem pyrolysierbaren Grundmaterial auf Holzbasis hergestellt ist.

2. Dekorationsstruktur nach Anspruch 1, **dadurch gekennzeichnet, dass** das pyrolysierbare Grundmaterial für das mindestens eine dekorative Element (14) mindestens eine Furnierlage aus Naturholz umfasst.

3. Dekorationsstruktur nach Anspruch 1 oder 2, **dadurch gekennzeichnet, dass** das pyrolysierbare Grundmaterial für das mindestens eine dekorative Element (14) technisches Holz umfasst.

4. Dekorationsstruktur nach einem der vorangehenden Ansprüche, **dadurch gekennzeichnet, dass** das mindestens eine dekorative Element (14) eine oder mehrere Intarsien umfasst.

5. Dekorationsstruktur nach einem der vorangehenden Ansprüche, **dadurch gekennzeichnet, dass** das mindestens eine dekorative Element (14) aus einem Carbidkeramikmaterial hergestellt ist.

6. Dekorationsstruktur nach Anspruch 5, **dadurch gekennzeichnet, dass** das mindestens eine dekorative Element (14) durch Carbidbildnerinfiltration nach einer Pyrolyse des pyrolysierbaren Grundmaterials hergestellt ist.

7. Dekorationsstruktur nach einem der vorangehenden Ansprüche, **dadurch gekennzeichnet, dass** das mindestens eine dekorative Element (14) plattenförmig ausgebildet ist.

8. Dekorationsstruktur nach einem der vorangehenden Ansprüche, **dadurch gekennzeichnet, dass** das mindestens eine dekorative Element (14) eine Dicke kleiner 1 cm aufweist.

9. Dekorationsstruktur nach einem der vorangehenden Ansprüche, **dadurch gekennzeichnet, dass** eine Oberfläche (16) des mindestens einen dekorativen Elements (14) mechanisch bearbeitet ist.

10. Dekorationsstruktur nach einem der vorangehenden Ansprüche, **dadurch gekennzeichnet, dass** das mindestens eine dekorative Element (14) mit einem oder mehreren farbbeeinflussenden Materialien infiltriert ist.

11. Dekorationsstruktur nach einem der vorangehenden Ansprüche, **dadurch gekennzeichnet, dass** der Träger (12) als Befestigungsstruktur für die Dekorationsstruktur an einer Anwendung ausgebildet ist.

12. Dekorationsstruktur nach einem der vorangehenden Ansprüche, **dadurch gekennzeichnet, dass** der Träger (12) als Tragestruktur bei der Herstellung der Dekorationsstruktur ausgebildet ist.

13. Dekorationsstruktur nach einem der vorangehenden Ansprüche, **dadurch gekennzeichnet, dass** der Träger (12) als Splitterschutzeinrichtung ausgebildet ist.

14. Dekorationsstruktur nach einem der vorangehenden Ansprüche, **dadurch gekennzeichnet, dass** der Träger (12) mindestens teilweise aus einem pyrolysierbaren Grundmaterial hergestellt ist.

15. Dekorationsstruktur nach Anspruch 14, **dadurch gekennzeichnet, dass** das pyrolysierbare Grundmaterial cellulosehaltiges Material umfasst.

16. Dekorationsstruktur nach Anspruch 14 oder 15, **dadurch gekennzeichnet, dass** das pyrolysierbare Grundmaterial technische Holzwerkstoffe umfasst.

17. Dekorationsstruktur nach einem der vorangehenden Ansprüche, **dadurch gekennzeichnet, dass** der Träger (12) mindestens teilweise aus einem faserverstärkten Material hergestellt ist.

18. Dekorationsstruktur nach einem der vorangehenden Ansprüche, **dadurch gekennzeichnet, dass** der Träger (12) mindestens teilweise aus einem Kunststoffmaterial hergestellt ist.

19. Dekorationsstruktur nach einem der vorangehenden Ansprüche, **dadurch gekennzeichnet, dass** der Träger (12) mindestens teilweise aus einem Keramikmaterial hergestellt ist.

20. Dekorationsstruktur nach einem der vorangehenden Ansprüche, **dadurch gekennzeichnet, dass** der Träger (12) mindestens teilweise aus einem biomorphen XC-Material hergestellt ist, wobei X ein Carbidbildner ist.

21. Dekorationsstruktur nach einem der vorangehenden Ansprüche, **dadurch gekennzeichnet, dass** der Träger (12) mindestens teilweise aus einem metallischen Material hergestellt ist.

22. Dekorationsstruktur nach einem der vorangehenden Ansprüche, **dadurch gekennzeichnet, dass** der Träger (12) mindestens teilweise aus Holz hergestellt ist.

23. Dekorationsstruktur nach einem der vorangehenden Ansprüche, **dadurch gekennzeichnet, dass** der Träger (12) einen mehrlagigen Aufbau aufweist.

24. Dekorationsstruktur nach einem der vorangehenden Ansprüche, **dadurch gekennzeichnet, dass** in den Träger (12) eine Befestigungseinrichtung für das mindestens eine dekorative Element (14) und/oder für eine Anwendung integriert ist.

25. Dekorationsstruktur nach Anspruch 24, **dadurch gekennzeichnet, dass** die Befestigungseinrichtung mindestens eine Aufnahme und/oder mindestens eine Nut und/oder mindestens eine Bohrung und/oder mindestens einen Flansch und/oder mindestens eine Lasche umfasst.

26. Dekorationsstruktur nach einem der vorangehenden Ansprüche, **dadurch gekennzeichnet, dass** das mindestens eine dekorative Element (14) formschlüssig mit dem Träger (12) verbunden ist.

27. Dekorationsstruktur nach einem der vorangehenden Ansprüche, **dadurch gekennzeichnet, dass** das mindestens eine dekorative Element (14) adhäsiv und/oder durch Lötung mit dem Träger (12) verbunden ist.

28. Dekorationsstruktur nach einem der vorangehenden Ansprüche, **dadurch gekennzeichnet, dass** das mindestens eine dekorative Element (14) stoffschlüssig mit dem Träger (12) verbunden ist.

29. Dekorationsstruktur nach einem der vorangehenden Ansprüche, **dadurch gekennzeichnet, dass** das mindestens eine dekorative Element (14) und der Träger (12) über ein pyrolysierbares Bindemittel verbunden sind.

30. Dekorationsstruktur nach einem der vorangehenden Ansprüche, **dadurch gekennzeichnet, dass** das mindestens eine dekorative Element (14) und der Träger (12) über ein infiltrierbares und/oder keramisches und/oder keramisierbares Bindemittel verbunden sind.

31. Dekorationsstruktur nach einem der vorangehenden Ansprüche, **dadurch gekennzeichnet, dass** das mindestens eine dekorative Element (14) und der Träger (12) integral verbunden sind.
